# EUROPEAN PATENT APPLICATION

(11) **EP 2 840 462 A1**
(43) Date of publication of application: **25.02.2015**
(21) Application number: 14181414.5
(22) Date of filing: 19.08.2014
(51) Int. Cl.: G06F 1/32, G06F 3/0488, H04W 52/02

(54) **Method and apparatus for saving battery of portable terminal**

(30) Priority: 20.08.2013 KR 20130098504
(71) Applicant: Samsung Electronics Co., Ltd, Gyeonggi-do 443-742 (KR)
(72) Inventor: Choi, Yoonsuk, Gyeonggi-do 443-742 (KR); Mun, Gitae, Gyeonggi-do 443-742 (KR); Park, Seungho, Gyeonggi-do 443-742 (KR)
(74) Representative: Jenkins, Richard Gavin

(57) **Abstract**

A method for saving a battery power of a terminal includes receiving a touch input on a touch screen, detecting an input stop event where the touch input is stopped, switching the touch screen to a turned-off state or a dim state, in response to the input stop event, and detecting an input resume event where the touch input is resumed during the turned-off state or the dim state, and switching the touch screen to be a turned-on state in response to the input resume event. Other embodiments including an apparatus for saving a battery power are also disclosed.

## Description

### TECHNICAL FIELD

The present disclosure relates to a method and apparatus for saving a battery power of a portable terminal, and more particularly, to a method and apparatus for saving a battery power of a portable terminal that can reduce a current consumption of the battery when entering a handwriting input.

### BACKGROUND

Recently, due to a development of communication technology, an electronic device such as a smart phone, a tablet PC, and the like is widely spread. A portable terminal among the electronic device can be used in a very wide field due to a convenience of use and an easy portability. Such a portable terminal uses and operates a battery having a limited capacity. Thus, as a portable terminal having a battery of a limited capacity provides various and multiple functions, an interest in a battery use time is increased.

As a touch technology is developed, a recent portable terminal supports various input functions, e.g., a handwriting input function using a touch screen in addition to a touch input. The handwriting input function is a function that stores a message when a user inputs the message such as a memo by using a finger or a stylus on the touch screen. This handwriting input function is utilized in a variety of applications such as a note, a memo, and the like.

In the meantime, when being operated in a handwriting input mode, a display unit of portable terminal maintains a turned-on state. At this time, since the portable terminal supplies a power to the display unit, a lot of battery power is consumed. In this process, a user may not input a handwriting during an input of handwriting so as to think about something or to listen to lectures. Thus, even when the user dose not input the handwriting, the portable terminal may consistently operate the display unit to consume the battery power unnecessarily. Accordingly, when the portable terminal is operated in the handwriting input mode, it is required to reduce the battery consumption by preventing waste of power consumption due to the display unit.

### SUMMARY

A method for saving a battery power of a terminal includes receiving a touch input on a touch screen, detecting an input stop event where the touch input is stopped, switching the touch screen to a turned-off state or a dim state, in response to the input stop event, and detecting an input resume event where the touch input is resumed during the turned-off state or the dim state, and switching the touch screen to be a turned-on state in response to the input resume event.

In some embodiments, wherein the terminal comprises at least one of a touch sensor unit, a proximity sensor unit, or a voice recognition module.

In some embodiments, the input stop event or the input resume event is detected using at least one of touch sensor data, proximity sensor data, key input data, or voice input data.

In some embodiments, the touch sensor unit is configured to detect a touch input signal, and the proximity sensor unit is configured to measure a distance between a touch input means and a screen.

In some embodiments, the input stop event occurs when a touch input means moves away more than a pre-defined distance from the touch screen.

In some embodiments, the input stop event occurs when a certain time is elapsed after the touch input means exceeds the pre-defined distance.

In some embodiments, the input stop event occurs when a touch input signal is not received more than a threshold time.

In some embodiments, the input stop event occurs when a key input for switching into a power saving mode is received.

In some embodiments, the input stop event occurs when a voice input instructing a stop of the touch screen is detected.

In some embodiments, the input resume event occurs when a touch input means approaches within a pre-defined distance from the touch screen, when a touch input signal is received, a point of time, when a key input having a setting of switching function is detected, or when a voice input instructing to switch into the input mode is detected.

An apparatus for saving a battery power of a terminal includes a touch screen configured to display an image or a video, and receive a touch input, a controller configured to detect an input stop event where the touch input is stopped, switch the touch screen to a turned-off state or a dim state, in response to the input stop event, and detect an input resume event where the touch input is resumed during the turned-off state or the dim state, and switch the touch screen to be a turned-on state in response to the input resume event.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating a configuration of a portable terminal according to an embodiment of the present disclosure;
FIG. 2 is a flowchart illustrating a method of controlling an operation of a display unit in a handwriting input mode according to an embodiment of the present disclosure; and
FIGS. 3A to 3D illustrate the operation of a screen in a handwriting input mode according to various embodiments of the present disclosure
FIGS. 4A to 3Dillustrateanother operation of a screen in a handwriting input mode according to various embodiments of the present disclosure.

### DETAILED DESCRIPTION

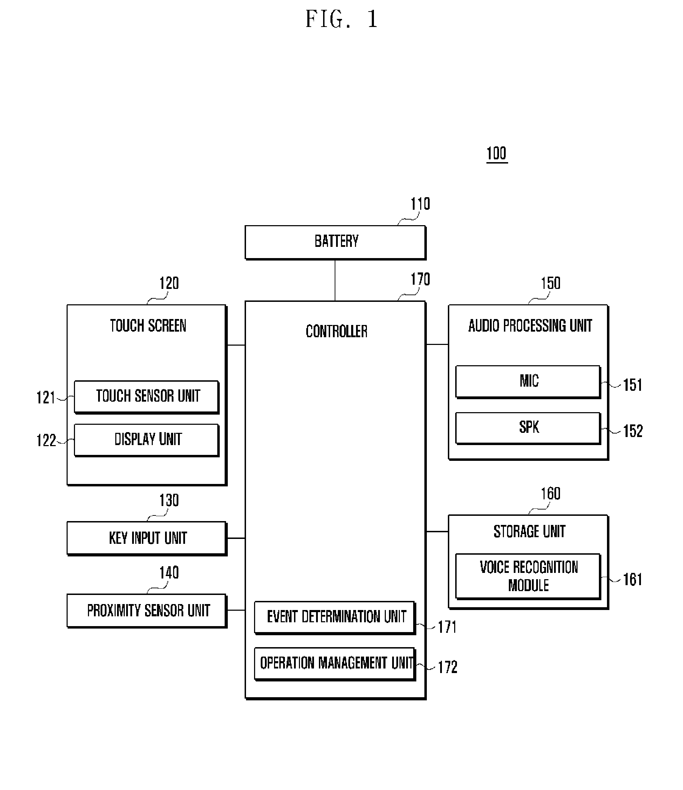

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure can be implemented in any suitably arranged electronic devices. Embodiments of the present disclosure are described with reference to the accompanying drawings in detail. The same reference numbers are used throughout the drawings to refer to the same or like parts. Detailed descriptions of well-known functions and structures incorporated herein can be omitted to avoid obscuring the subject matter of the present disclosure.

In the present disclosure, "a wait state or a dim state" of a display unit means a state in which a battery consumption is saved by outputting a dark display screen for a predefined time before the display unit is completely turned off, and the wait state or the dim state can be interchangeably used in a description and claims of the present disclosure.

Prior to a detailed description, a portable terminal according to an embodiment of the present disclosure can be a terminal to provide a system power-saving mode, and can include a mobile communication terminal, a personal digital assistant (PDA), a tablet personnel computer(PC), a portable multimedia player (PMP), or the like.

FIG. 1 is a block diagram illustrating a configuration of a portable terminal according to an embodiment of the present disclosure.

Referring to FIG. 1, the portable terminal 100 according to an embodiment of the present disclosure supports the function of automatically controlling an operation (e.g., turned-on, turned-off/wait) of a display unit by using at least one of touch sensor information, proximity sensor information, voice input information, or key input information in a handwriting input mode.

To this end, the portable terminal 100 of the present disclosure can include a battery 110, a touch screen 120, a key input unit 130, a proximity sensor unit 140, an audio processing unit 150, a storage unit 160, and a controller 170.

The battery 110 can supply power to each of the above-described configurations to operate the portable terminal 100. The battery 110 can be formed with a rechargeable secondary battery, such as a lithium ion battery, a nickel battery, a cadmium battery, a nickelcadmium battery, a chemical cell, etc.

The touch screen 120 can display a screen according to a user function execution, and sense a touch event related to a user function control. The touch screen 120 according to an embodiment of the present disclosure can include a touch sensor unit 121 and a display unit 122.

The touch sensor unit 121 can be configured with a touch sensor such as a capacitive overlay type, a resistive overlay type, an infrared beam type, or the like, or configured with a pressure sensor. The touch sensor unit 121 can be configured with various sensors that can sense a contact or a pressure of object in addition to the above-described sensors. The touch sensor unit 121 can detect user's touch input (e.g., a user gesture), and generate a sensing signal to transmit to the controller 170. Here, the touch event can include a touch coordinate (X, Y) information.

In particular, the touch sensor unit 121 of the present disclosure can include a pen recognition sensor to operate a touch pen function, and, in this case, the portable terminal 100 can include a touch pen. Further, the touch sensor unit 121 of the present disclosure can sense a change of touch data due to a difference of distance to a touch input means, and support to measure a separation distance between the touch input means and a screen based on a touch data value.

The touch sensor 121 according to the present disclosure can support a switching function to change into a turned-off/dim state or tuned-on state of the display unit by the controller 170 in the handwriting input mode. The touch sensor unit 121 of the present disclosure can be activated by the controller 170 in the handwriting input mode.

For example, the touch sensor unit 121 can measure a distance between a touch input means (e.g., a finger or a touch pen) and a screen during the operation in the handwriting input mode, sense a point of time when the touch input means exceeds a pre-defined distance or a point of time when a touch signal by the touch input means is not received for a pre-defined time, and transmit a sensing signal to the controller. Further, when the terminal is operated in the handwriting input mode, in the turned-off/dim state of the display unit 122, the touch sensor unit 121 can sense a point of time when a touch input means approaches a predefined distance or a point of time when receiving a touch signal due to the touch input means, and transmit the sensed point of time to the controller 170. The controller 170 can determine an input stop event that determines that an input of user is stopped, or an input resume event that determines that an input of user is started again based on a touch signal received from the touch sensor unit 121. Here, the input stop event and the input resume event can be set at a manufacture time of a terminal, or set or modified by a user later.

The display unit 122 can convert an image data received from the controller 170 into an analog signal to display under the control of the controller 170. The display unit 122 can provide various screens according to an operation of the terminal, e.g., a lock screen, a home screen, an application (hereinafter, referred to as "App") execution screen, a menu screen, a keypad screen, a message writing screen, an internet screen, and the like. In particular, when the portable terminal 100 is operated in the handwriting input mode, the display unit 122 according to an embodiment of the present disclosure can output a handwriting input screen in response to the operation of the handwriting input mode, and output a screen according to a user's handwriting input. The display unit 122 according to an embodiment of the present disclosure can be operated in the turned-off/dim state or the turned-on state in the handwriting input mode under the control of the controller 170.

The key input unit 130 can receive an input of number or character information, and include a plurality of input keys and function keys for setting various functions. The key input unit 130 can generate a key signal related to a user setting and a function control of the terminal to transmit to the controller 170. The key input unit 130 can be configured with a key pad of button type (e.g., a soft key, a hard key) including a number key, and a direction key, and can be configured with a certain function key in one side of the portable terminal 100.

The key input unit 130 according to an embodiment of the present disclosure can support a switching function to change to the turned-off/dim state of the display unit 122 or the turned-on state in the handwriting input mode. For example, in the operation of the handwriting input mode, the portable terminal 100 can set the switching function of the turned-off/dim or the turned-on of the display unit 122 in response to a specific key. When a key input signal having a setting of a switching function is detected in the handwriting input mode, the controller 100 can control the display unit 122 to change from the turned-on state to the turned-off/dim state, or change from the turned-off/dim state to the turned-on state in response to the detected signal.

The proximity sensor unit 140 can sense an object (e.g., a hand or an object) that approaches a proximity sensor, and transmit proximity information of the object to the controller 170. The proximity sensor unit 140 can include a light-transmitting unit and a light receiving unit. The light-transmitting unit can be formed of a light emitting diode such as IR LED, and the light receiving unit can be formed of a light receiving diode absorbing infrared (IR), but is not limited thereto.

The proximity sensor unit 140 according to an embodiment of the present disclosure can be activated in the handwriting input mode and sense the proximity of the object. Specifically, when the proximity sensor unit 140 is activated, the light-transmitting unit projects light, and the projected light is reflected by the object approaching the proximity sensor. The reflected light can be transmitted to the light receiving unit, and the light receiving unit can absorb the transmitted light. The light receiving unit can change the intensity (lux) of the absorbed light to a current, and convert the changed current into a proximity sensor value through an Analog-to Digital converter (ADC). The proximity sensor unit 140 can transmit the proximity sensor value to the controller 170, and the controller 170 can determine the proximity of the object based on the proximity sensor value.

In the present disclosure, the proximity sensor unit 140 can support a switching function to change to the turned-off/dim or turned-on state of the display unit 122 according to the proximity of the object in the handwriting input mode. For example, in the operation of the handwriting input mode, the proximity sensor 140 can sense a point of time when the object exceeds a pre-defined distance or a point of time when the object approaches within a pre-defined distance, and transmit a proximity sense signal to the controller 170. Then, the controller 170 can determine the input stop event or the input resume event based on the proximity sensor information.

The audio processing unit 150 can include a speaker (SPK) 151 to output an audio data which are sent and received during a call, an audio data included in a message, and an audio data which are stored in the storage unit, and the like and a microphone (MIC) 152 to collect user's voice or other audio signal. In addition, the audio processing unit 150 can receive an external sound signal by the microphone in a call mode or a recording mode, a voice recognition mode, and the like, and process the received external sound signal as an electrical voice data. The audio processing unit 150 can implement various noise removal algorithms for the removal of noise which is generated in the process of receiving the voice. The audio processing unit 150 according to an embodiment of the present disclosure can collect and process user's voice signal when the microphone is operated in the handwriting input mode.

The storage unit 160 can store at least one application necessary for operating the function of terminal, a user data generated by a user, a message transmitted and received to/from a network, and a data according to an execution of application, and the like. The storage unit 160 can include a program area and a data area.

The program area can store an operating system (OS) for the booting of a terminal and the operation of each configuration described above and applications downloaded and installed. In particular, the program area of the present disclosure can store a voice recognition module 161. The voice recognition module 161 can support to perform the function of terminal by using a voice recognition. When it is determined that one of preset voice commands is inputted as a voice input based on the voice recognition result, the voice recognition module 161 can include a routine of executing a corresponding function. Further, the voice recognition module 161 can be activated by the controller 170 in the handwriting input mode. In the present disclosure, the voice recognition module 161 can previously define a voice command to change into the turned-off/dim state or the turned-on state of the display unit 122 in the handwriting input mode.

The data area is an area in which data generated according to use of the terminal 100 is stored. The data area can store the data which is used or generated during operation of the handwriting input mode. Further, the data area can store various setting information related to a user interface provided to operate the handwriting input mode and a function processing and a program for the operation of the handwriting input mode.

The storage unit 160 can include at least one type of storage medium among a flash memory type, a hard disk type, a multimedia card micro type, a card-type memory (e.g. SD or XD memory, etc.), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, and an optical disk.

The controller 170 can control the overall operation of the portable terminal 100 and a signal flow between internal blocks of the portable terminal 100, and perform a data processing function to process data. For example, the controller 170 can be a central processing unit (CPU), a micro processor unit (MPU), an application processor, and the like.

The controller 170 according to an embodiment of the present disclosure can determine whether the event to control the turned off/dim or turned on state of the display unit is detected in the handwriting input mode, and can control the operation of the display unit in response to the detected event.

The controller 170 according to an embodiment of the present disclosure can include an event determination unit 171 and an operation management unit 172. The event determination unit 171 can determine a predefined input stop event or input resume event so as to control the operation of the display unit 122 based on at least one of touch sensor information, proximity sensor information, key input information, or voice input information, and transmit the determined event to the operation management unit 172.

The operation management unit 172 can control the turned off/dim or turned on state of the display unit in response to the transmitted event. Further, in the operation of the handwriting input mode, the operation management unit 172 can control to operate at least one of a touch sensor unit, a proximity sensor unit, or a voice recognition module.

Hereinafter, the operation of saving a battery power by controlling the operation of the display unit in the handwriting input mode is described in detail with reference to the drawings. A modification can be variously implemented according to the trend of digital convergence, but not all modification can be enumerated here. Further, the portable terminal 100 according to the present disclosure can further include configurations which are not mentioned in the above such as a communication unit, a GPS module, and a camera module, and the like. It is obvious that the portable terminal 100 of the present disclosure can exclude specific configurations from the above-described configuration or can be replaced by a different configuration according to a provision type.

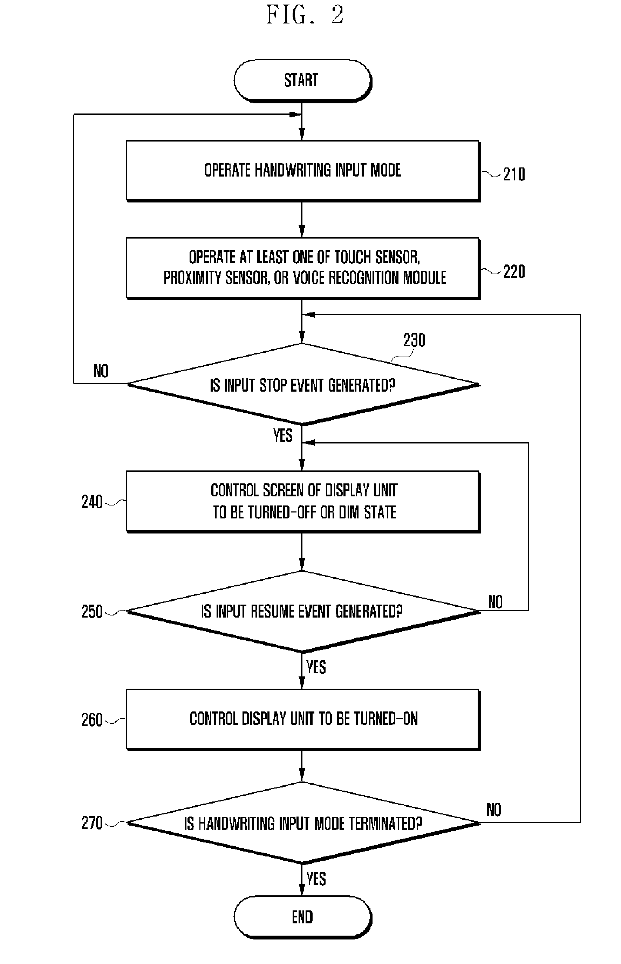

FIG. 2 is a flowchart illustrating a method of saving a battery power in a handwriting input mode according to an embodiment of the present disclosure.

Referring to FIG. 2, the portable terminal 100 according to an embodiment of the present disclosure can operate the handwriting input mode at operation 210. In this case, when the handwriting input mode is activated, the portable terminal 100 can display a handwriting input screen, e.g., a note app screen, a memo app screen, and the like on the display unit 122.

The handwriting input mode means a mode of recognizing and storing a message when the message is directly inputted by using a touch input means (e.g., a touch pen or a finger) like a handwriting on a note. The handwriting input mode according to the present disclosure can be activated in all functions, which can input a text like a character, such as a note function, a memo function, a scheduler function, a calendar function, and the like. The portable terminal can sense the handwriting input of the user in the handwriting input mode, thereby performing the handwriting input function.

At operation 220, the portable terminal 100 can control to operate at least one of a touch sensor unit, a proximity sensor unit, or a voice recognition module to determine a user input operation. At operation 230, the portable terminal 100 can determine whether a predefined input stop event is generated during the operation of the handwriting input mode. The input stop event can be generated based on at least one of touch sensor information, proximity sensor information, voice input information, or key input information.

For example, when operating the handwriting input mode, the portable terminal 100 can determine whether one of input stop events occurs. The input stop events occur, for example, when a touch input means exceeds a pre-defined distance from a screen, when a certain time is elapsed after the touch input means exceeds the pre-defined distance, when a touch input signal is not received, a point of time when a key input having a setting of switching function is detected, or when a voice input instructing a stop of the display unit is detected.

At operation 240, the portable terminal 100 can switch the display unit 122 to a turned-off state in response to one of the input stop events. Alternatively, the portable terminal 100 can control the screen of display unit to be a dim state in response to one of the input stop events. According to various embodiments of the present disclosure, the setting for changing from the turned-on state of the display unit to the turned-off state or to the dim state from the turned-on state can be implemented at the manufacture of the terminal, and then can be changed according to the setting of the user.

In this process, when the input stop event is not generated, the portable terminal 100 can return to operation 210, and sense the user's handwriting input during the operation of handwriting input mode, and thus perform the handwriting input function.

At operation 250, the portable terminal 100 can determine whether the input resume events are generated based on at least one of touch sensor information, proximity sensor information, voice input information, or key input information during the turned-off and/or dim state of the display unit 122.

For example, the portable terminal 100 can determine whether one of the input resume events occurs. The input resume events occur, for example, when a touch input means approaches within a pre-defined distance from the display unit 122 during the turned-off or dim state of the display unit, when a touch input signal is received, when a key input for switching into the turn state is detected, or when a voice input instructing to switch into an input mode is detected.

At operation 260, when one of the input resume events is generated, the portable terminal 100 can control the display unit 122 to be turned-on, and output the handwriting input screen on the display unit 122.

At operation 270, the portable terminal 100 can determines whether the handwriting input mode is terminated, and, if not terminated, return to operation 230 to repeat the process.

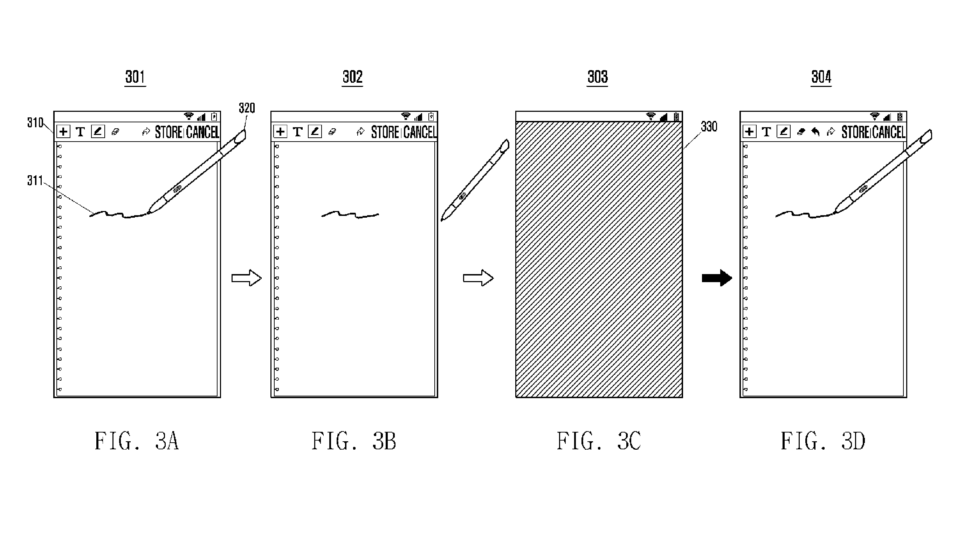

FIGS. 3A to 3D illustrate the operation of a screen in a handwriting input mode according to various embodiments of the present disclosure. In the embodiments illustrated in FIGS. 3A to 3D, the operation of the screen is controlled based on touch sensor information or proximity sensor information,

Referring to FIG. 3, the portable terminal 100 according to various embodiments of the present disclosure can operate a handwriting input mode.

When operating the handwriting input mode, as shown in screen 301, the display unit 122 can display a handwriting input screen 310 as a full screen under the control of the controller 170. In this case, it is just an example, and thus not limited thereto.

The user can input the handwriting by using a touch input means in the handwriting input mode. In this case, the touch input means can be any one of a touch pen 311 or a finger in the handwriting input mode. Hereinafter, it is assumed that user's touch input means according to various embodiments of the present disclosure is a touch pen 311, but not limited thereto. For example, the terminal can display a start point of the touch input by the touch pen 311 on the display unit 122, and can display a trajectory 311 according to user's touch operation on the handwriting input screen based on the start point.

The portable terminal 100 of the present disclosure can control to operate at least one of the touch sensor unit 111, the proximity sensor unit 140 and the voice recognition module in the handwriting input mode, and can be operated in a wait state of the user's input. In particular, the touch sensor unit of the present disclosure can measure a distance between a touch pen or a user's finger and a screen by operating a sensor that can sense a distance between a touch input means and the screen.

In such a state, the user can stop the operation of handwriting input. For example, as shown in screen 302, the user can move the touch pen 320 to the outside of the screen of the display unit 122, or can move the touch pen 320 to a space beyond a pre-defined distance from the screen. Then, the portable terminal 100 can detect an input stop event based on sensor information from at least one of the activated touch sensor unit 121, the proximity sensor unit 140, or the voice recognition module.

For example, when the touch signal or the proximity signal by the touch pen 320 is not received through the proximity sensor unit 140 or the touch sensor unit 121, the terminal can determine that the touch pen 320 does not exist on the screen of the display unit 122. Further, the portable terminal 100 can measure data variation of the touch signal or the proximity signal by the touch pen 320, and calculate a distance between the touch pen 320 and the screen according to the data variation. Next, when the distance between the touch pen 320 and the screen exceeds a separation distance which is previously defined for the input stop signal, the portable terminal 100 can determine that the handwriting input is stopped.

In response to the input stop events, as shown in screen 303, the portable terminal 100 can control the display unit 122 to be turned-off to display a screen 330 of the display unit 122 to which the power supply is blocked. Even in this case, the portable terminal 100 can maintain the operation state of at least one of the touch sensor unit 121, the proximity sensor unit 140, or the voice recognition module 161, and can wait the user's input.

In such a state, the user can approach the touch pen 320 near the screen of the display unit 122, or move over the display unit in order to restart a handwriting input.

Then, the portable terminal 100 can detect the input resume events based on at least one of touch sensor information or proximity sensor information, and, in response this, as shown in 304, can control to operate the display unit 122, and can display the handwriting input screen 310 which was output on the display unit before a turned-off state on the display unit 122.

In the meantime, when the screen of the display unit is set to operate in a wait state (e.g., dim state) in response to the input stop events, screen 303 can be displayed as a dim screen to save the battery consumption. Here, the dim screen is defined as a screen in which the screen of the display unit 110 is darkly displayed for a predefined time before completely turned-off.

As described above, according to various embodiments of the present disclosure, the operation of the display unit can be controlled based on a voice input signal or a key input signal in addition to the touch sensor information or the proximity sensor information in the handwriting input mode.

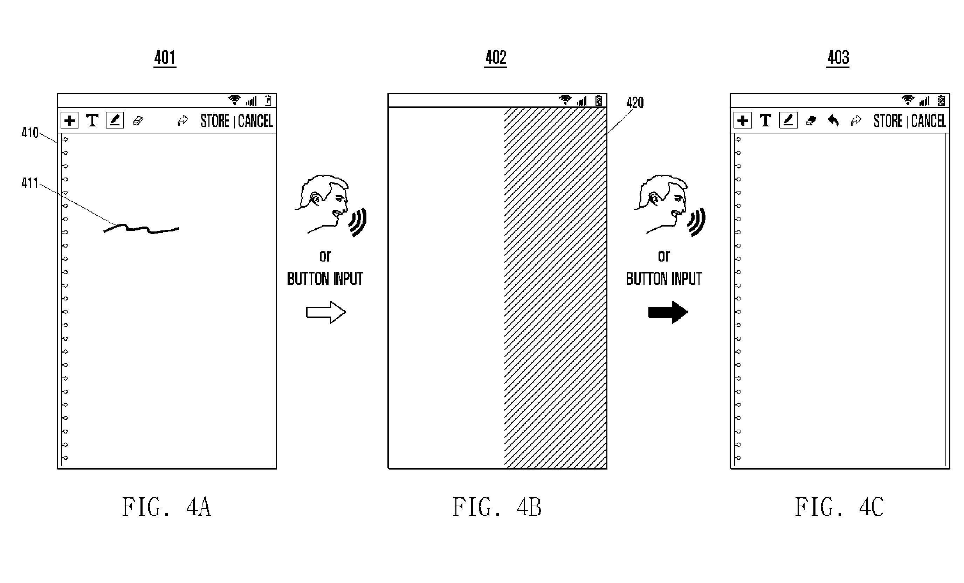

FIGS. 4A to 4C illustrate the operation of a screen in a handwriting input mode according to various embodiments of the present disclosure. In the embodiments illustrated in FIG. 4, the operation of the screen is controlled based on a voice input signal or a key input signal.

When the app supporting the handwriting input mode is activated, as shown in 401, the portable terminal 100 can output a handwriting input screen 410 on the display unit 122. The user can perform a touch input operation by using the touch pen to enter a handwriting input on the screen in the handwriting input mode.

In such a state, the user can perform a pre-defined operation in order to control the operation of the display unit 122. For example, the user can press a key button in which an operation switching function of the display unit 122 is defined or a button provided in the touch pen. Then, the portable terminal 100 can detect the input stop events according to a key button input signal.

Further, in the various embodiments of the present disclosure, the user can input a voice instructing an input stop through a microphone. Here, the voice instructing an input stop can be changed according to a pre-defined setting. The portable terminal 100 of the present disclosure can analyze a voice signal collected through microphone, and can determine that the input stop event is detected when the voice signal is analyzed to be an instruction for an input stop.

Next, as shown in screen 402, in response to an event stop input, the portable terminal 100 can display a screen 402 of the display unit 122 which is turned-off to block the power supply. Even in this case, the portable terminal 100 can maintain the operation state of at least one of the touch sensor unit 121, the proximity sensor unit 140, or the voice recognition module 161, and can wait the user's input. In the meantime, when the screen of the display unit 122 is set to operate in a wait state (e.g., dim state) in response to the input stop event, screen 402 can be displayed as a dim screen to save the battery consumption.

Next, the user can press a pre-defined key again and enter a voice input instructing the start of the voice in order to restart a handwriting input. Then, the portable terminal 100 can detect the input resume events based on at least one of a key input signal or a voice input signal, and, in response this, can control to operate the display unit 122, and, as shown in screen 403, can display the handwriting input screen 410 which is a screen before a turned-off state on the display unit 122.

The portable terminal according to various embodiments of the present disclosure can control the display unit as a turned-off state or a dim state by automatically determining the case in which the user does not input a handwriting in a handwriting input mode. Further, the portable terminal can automatically determine the case in which the user restarts the handwriting input in the turned-off or dim state of the display unit to operate the display unit. Accordingly, the portable terminal can reduce a current consumption of the battery and prevent a waste of power consumption by automatically controlling the operation of the display unit in a field input mode.

Further, the portable terminal according to various embodiments of the present disclosure can operate the display unit without an unlocking in response to one of predefined input resume events, even when the screen is turned off as the handwriting input is paused for a moment in the portable terminal in which a lock screen is set, so that the user is able to start again the handwriting input.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for saving a battery power of a terminal, the method comprising:
receiving a touch input on a touch screen;
detecting an input stop event where the touch input is stopped;
switching the touch screen to a turned-off state or a dim state, in response to the input stop event; and
detecting an input resume event where the touch input is resumed during the turned-off state or the dim state; and
switching the touch screen to a turned-on state in response to the input resume event.

2. The method of claim 1, further comprising operating at least one of a touch sensor unit, a proximity sensor unit, or a voice recognition module.

3. The method of claim 2, wherein the input stop event or the input resume event is detected using at least one of touch sensor data, proximity sensor data, key input data, or voice input data.

4. The method of claim 2, wherein the touch sensor unit is configured to detect a touch input signal, and the proximity sensor unit is configured to measure a distance between a touch input means and a screen.

5. The method of claim 1, wherein the input stop event occurs when a touch input means moves away more than a pre-defined distance from the touch screen.

6. The method of claim 1, wherein the input stop event occurs when a certain time is elapsed after the touch input means exceeds the pre-defined distance.

7. The method of claim 1, wherein the input stop event occurs when a touch input signal is not received more than a threshold time.

8. The method of claim 1, wherein the input stop event occurs when a key input for switching into a power saving mode is received.

9. The method of claim 1, wherein the input stop event occurs when a voice input instructing a stop of the touch screen is detected.

10. The method of claim 1, wherein the input resume event occurs when a touch input means approaches within a pre-defined distance from the touch screen, when a touch input signal is received, a point of time, when a key input having a setting of switching function is detected, or when a voice input instructing to switch into the input mode is detected.

11. An apparatus for saving a battery power of a terminal, the apparatus comprising:
a touch screen configured to display an image or a video, and receive a touch input; and
a controller configured to:
detect an input stop event where the touch input is stopped;
switch the touch screen to a turned-off state or a dim state, in response to the input stop event; and
detect an input resume event where the touch input is resumed during the turned-off state or the dim state; and
switch the touch screen to a turned-on state in response to the input resume event.

12. The apparatus of claim 11, further comprising at least one of:
a touch sensor unit configured to sense a touch input signal, and measure a distance between a touch input mean and the touch screen;
a proximity sensor unit to measure a proximity of an object, and measure a distance between an object and a screen; and
a voice recognition module to collect a voice collected through a microphone, and recognize the voice.

13. The apparatus of claim 12, wherein the input stop event or the input resume event is detected using at least one of touch sensor data, proximity sensor data, key input data, or voice input data.

14. The apparatus of claim 11, wherein the input stop event occurs when a touch input means moves away more than a pre-defined distance from the touch screen, when a certain time is elapsed after the touch input means exceeds the pre-defined distance, when a touch input signal is not received more than a threshold time, when a key input for switching into a power saving mode is received, or when a voice input instructing a stop of the touch screen is detected.

15. The apparatus of claim 11, wherein the input resume event occurs when a touch input means approaches within a pre-defined distance from the touch screen, when a touch input signal is received, a point of time, when a key input having a setting of switching function is detected, or when a voice input instructing to switch into the input mode is detected.
